# EUROPÄISCHE PATENTANMELDUNG

(11) **EP 1 256 435 A2**
(43) Veröffentlichungstag der Anmeldung: **13.11.2002**
(21) Anmeldenummer: 02001461.9
(22) Anmeldetag: 21.01.2002
(51) Int. Cl.: B29C 47/82

(54) **Geschlossene Zylindertemperierung am Umfang**

(30) Priorität: 21.01.2001 DE 10102610
(71) Anmelder: Milacron Inc., Cincinnati, Ohio 45206 (US)
(72) Erfinder: Krüger, Ernst Johann, 26629 Grossefehn (DE)
(74) Vertreter: Stahlberg, W. J. H.

(57) **Zusammenfassung**

Die Erfindung bezieht sich auf ein Verfahren und eine Vorrichtung, insbesondere zur Extrusion von Kunststoffen, die aus einem Zylindergehäuse (1) und sich darin drehenden Schnecken aufgebaut ist. Die Schnecken sind als Einschnecke oder sich Doppelschnekken ausgeführt. Der Zylinder (1) wird im wesentlichen in der erfindungsgemäßen Ausführung mit einem geschlossenen, sich selbstregulierenden, teilgegefüllten und verschlossenen Rohrleitungssystem (3) unter Ausnutzung von Siede-/ bzw. Verdampfungs- und Kondensationseffekten temperiert.

## Beschreibung

Schnecken zur Verarbeitung von thermoplastischen Kunststoffen sind so aufgebaut, daß entlang der Schneckenlänge unterschiedliche Zonen vorliegen. Es wird zwischen Einund Doppelschnecken unterschieden. Die Doppelschnecken werden in einem Doppelschneckenzylinder geführt. Verfahrenstechnisch werden sie durch den Achsabstand der Doppelschnecken sowie den Durchmesser und die verfahrenstechnische Länge charakterisiert. Der Antrieb erfolgt über ein Reduzier- und ein Verteilgetriebe.

Hauptanforderung einer jeden Schneckenauslegung ist es, die Schneckengeometrien so gestalten, daß zum einen ein großer Durchsatz gefahren und zum anderen eine möglichst weite Rezepturbandbreite verarbeitet werden kann. Die Temperatur der Masse am Austritt des Extruders sollte möglichst gering sein. Dabei spielt die Homogenität der Temperatur ebenfalls eine wichtige Rolle.

Eine große Problematik bei der Auslegung liegt darin, daß in Abhängigkeit der Schnekkendrehzahlen teilweise erhebliche Friktionsenergie entsteht, die abgeführt werden muß. Diese Friktionsenergie entsteht insbesondere in der sogenannten Kompessionszone und in der Meteringzone. Während auf der einen Seite das Zuviel an Friktionsenergie abgeführt werden muß, besteht insbesondere im Vorwärmbereich ein ständiger Bedarf an Wärmeenergie

### Stand der Technik

Es ist Stand der Technik, daß bei Doppelschneckenextrudern die Schnecken mit Öl in einem offenen System oder alternativ in einem geschlossenen System temperiert werden.

Bei der Zylindertemperierung ist es Stand der Technik, eine Öl-, Wasser bzw. eine Lufttemperierung einzusetzen. Die Flüssigkeit bzw. die Luft übernimmt die oben beschriebene notwendige Kühlfunktion, während Heizbänder die Heizfunktion übernehmen. Betrachtet man den Wärmebedarf entlang der Zylinderlänge, so zeigt sich, daß im Einzugsund Vorwärmbereich Wärmeenergie benötigt wird, während in den Bereichen der Metering- und der Kompressionszone Wärme abgeführt werden muß.

Die drei o. a. Zylindertemperiersysteme haben entscheidende Nachteile. Eine Öltemperierung ist sehr wartungsintensiv, Ventile "verbrennen" mit der Zeit, Öl vercrackt, Leitungen verstopfen etc., so daß nach einer gewissen Laufzeit mit entsprechendem System häufig große Unzulänglichkeiten auftreten. Die Flüssigkeitstemperiersysteme benötigen zusätzlich einen Wärmetauscher, mit dem die geforderte Regeltemperatur erzeugt wird. Ein Wärmetauscher hat immer erheblich Verluste. Das System mit der Luftkühlung mit entsprechenden Gebläsen ist zwar deutlich wartungsärmer, jedoch ist die Intensität der Kühlwirkung begrenzt und grundsätzlich wird durch den Luftstrom Staub aufgewirbelt.

Ausgehend von dem vorstehend erläuterten Stand der Technik, besteht die erfinderische Technik darin, eine Temperierung für Kunststoffverarbeitungszylinder so zu entwickeln bzw. weiterzuentwickeln, daß diese wartungsfrei ist. Ziel ist es außerdem, daß dieses System weitgehend selbstregulierend ist. Das bedeutet, daß bei unterschiedlichen Anforderungen zur Temperierung bzw. zum Wärmetransport, das System selbstoptimierend darauf reagiert, ohne daß von Außen Einstellungen erfolgen müssen.

Diese erfinderische Aufgabe wird dadurch gelöst, daß am Umfang des Zylinders selbständig wärmetransportierende rohrleitungsähnliche Elemente angebracht werden. In diesem Leitungssystem wird die Energie mittels sich darin befindlicher Medien im Kreislauf transportiert. Das geschlossenen System nimmt die "Zuvielenergie" an einer Stelle auf und transportiert sie in den Bereich, der Energie benötigt.

Nachfolgend wird die Erfindung anhand von Zeichnungen näher erläutert.

Es zeigen:
- Figur 1: Eine Zylindertemperiervorrichtung mit Angabe eines Bereiches mit Wärmeüberschuß und mit Wärmebedarf
- Figur 2: Eine Zylindertemperiervorrichtung mit außen angebrachten, gewickelten Rohren als geschlossenes Wärmetransportsystem
- Figur 3: Detaildarstellung eines möglichen Temperieraufbaus (Schnitt)

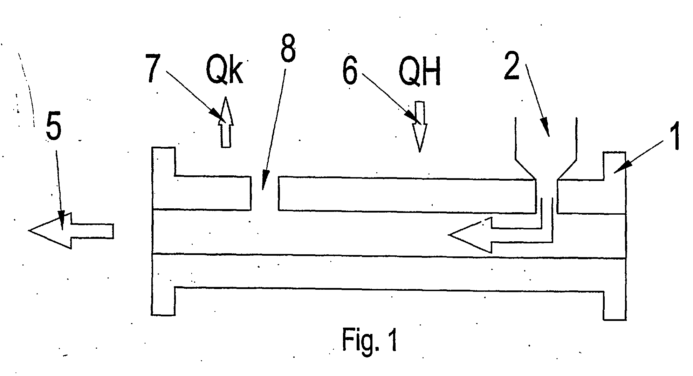

Bei der in Fig. 1 dargestellten Vorrichtung ist ein Kunststoffverarbeitungszylinder (1) dargestellt, in dem entsprechende, nicht dargestellte Kunststoffverarbeitungsschnecken den eigentlichen Kunststoff plastifizieren und transportieren. Der Kunststoff wird in Form von Pulver oder Granulat über den Trichter (2) zugeführt und verläßt den Zylinder in der Regel über ein hier nicht dargestelltes Werkzeug an der Anschlußseite (5). Eine Entgasung (8) ist hier exemplarisch aufgeführt, sie muß jedoch nicht zwangsläufig vorhanden sein. Im Vorwärmbereich (6) wird Wärmeenergie QH benötigt, in der Meteringzone (7) muß Wärmeenergie QK abgeführt werden. Mögliche andere Wärmequellen sind nicht aufgeführt.

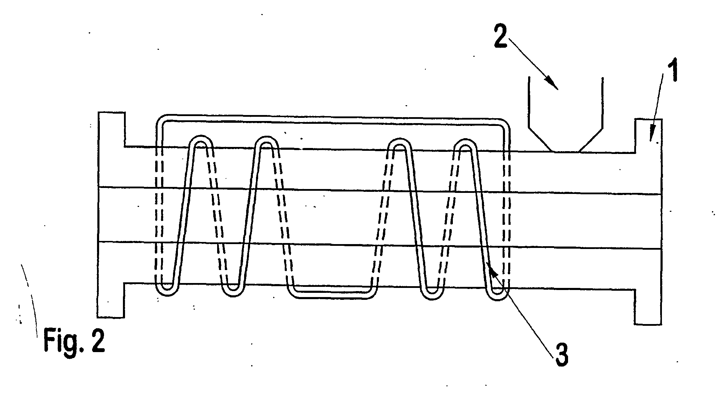

In Fig. 2 ist auf einem entsprechenden Kunststoffverarbeitungszylinder (1) ein entsprechendes Rohr (3) aufgewickelt. Es ist exemplarisch angenommen, daß entlang des Zylinders verschiedene Wickeldichten bzw. Wickelmuster realisiert werden können. Die Medien bzw. die Wärmezirkulation in dem verschlossenen Rohr kann mit oder ohne eine hier nicht dargestellte Pumpe ausgeführt werden. Das für den Wärmetransport eingesetzte Medium im Wickelrohr besitzt in der Regel einen Siedepunkt zwischen 75°C und 250 °C, der Kondensationsbereich liegt häufig zwischen 22°C bis 60°C. In Abhängigkeit der zu verarbeitenden Kunststoffe bzw. deren Verarbeitungstemperaturen werden unterschiedliche Wärmetransportmedien eingesetzt, in der Regel ist das Rohr teilgefüllt. Die Begriffe Sieden und Verdampfen werden nebeneinander benutzt.

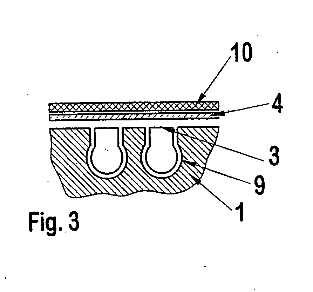

In Fig. 3 ist eine Wicklung eines Rohres (3) in entsprechende Verüefungen (9) im Zylinder (1) dargestellt. Die Heizung von außen (4) wird durch eine Isolierung (10) gegen Wärmeabstrahlung nach außen geschützt. Diese Außenheizung (4) ist in der Regel nur für den Anfahrprozeß, also nur zum erstmaligen Aufheizen notwendig und dient im Dauerbetrieb in der Regel nur als mögliche Schutzheizung gegen Wärmeverlust nach außen.

In Betrieb wird in den einzelnen Bereichen innerhalb des Zylinders Wärme produziert, die abgeführt werden muß. Diese Wärme führt zum Verdampfen der in den Leitungen vorhandenen Medien. Die Verdampfungsenergie ist entsprechend der eingesetzten Medien erheblich, so daß dieser Zustandsübergang in den Temperierleitungen Wärme aus dem Zylinder entzieht. Somit befindet sich in den Leitungen Bereiche mit gesiedeten Medien und Bereiche mit Flüssigkeiten.
Dieser Unterschied im Medienzustand innerhalb der Leitungen erzeugt automatisch eine Druckdifferenz und damit einen Medientransport. Gelangt aber in den kalten Zylinderbereich, in dem innen im Zylinder Temperatur benötigt wird, ein gasförmiger Zustand in die Temperierleitungen, so kondensiert das Wärmetrans portmedium. Die Kondensation führt zur Wärmeabgabe, somit entsteht ein Energiekreislauf.

Dieser Kreislauf durchläuft folgende Phasen:
- Phase 1: Es entsteht Wärme im Zylinder. Diese Wärme verdampft (siedet) eine Flüssigkeit in einem geschlossenen Leitungssystem. Durch das Verdampfen wird dem Zylinder Energie entzogen. Die Verdampfungsenergie ist im gasförmigen Medium gespeichert.
- Phase 2: Die Verdampfung erzeugt Druck. Durch Druckausgleich in den kalten Zylinderbereich, in dem Flüssigkeiten in dem Wärmetranportleitungen vorliegen, wird das Gas transportiert.
- Phase 3: Das Gas wird in kalte Bereiche des Rohrleitungssystems transportiert, wo es kondensiert. Bei der Kondensation wird die zuvor gespreicherte Energie an den Zylinder abgeben. Es entsteht ein umgekehrter Zustandsübergang.
- Phase 4: Das "flüssige Medium" wird zu den Bereichen transportiert, in denen der Zylinder heiß ist, um dort wieder in den Verdampfungsprozeß entsprechend Phase 1 einzutreten und den Kreislauf zu schließen.

Der Kreislauf kann durch eine Pumpe oder sonstige Einbauten in seiner Intensität unterstützt, gedrosselt bzw. geregelt werden.

Versuche haben ergeben, das bei diesem System ein Selbstregulierungseffekt des Wärmetransports entsteht. Muß mehr Wärme transportiert werden, da z. B. die Kunststoffmasse im Zylinder heißer geworden ist, so wird mehr flüssiges Medium verdampft, mehr "Verdampfungsenergie" in die Wärmetransportleitung eingeführt und gleichzeitig im kalten Bereich mehr Medium kondensiert. Hierbei steigt der Druck in den Leitungen und die Strömungsgeschwindigkeit nimmt ebenfalls zu.

Die Ausführungsformen können weit von dem hier dargestellten Rohrsystem in Fig. 2 abweichen. So ist z. B. denkbar, einen doppelwandigen Zylinder mit Einbauten einzusetzen oder mit einer Schweißstruktur entsprechende Wärmeleitungssysteme aufzubauen. Ebenso können diese Temperiersysteme auch außerhalb der Kunststoffverarbeitung Einsatz finden.

## Patentansprüche

1. Zylindervorrichtung zur Verarbeitung von Kunststoffen, aufgebaut aus einem Zylinder, mit mindestens einer zentralen Bohrung, deren Längen- / Durchmesserverhältnis mindestens 15 beträgt, wobei in der Bohrung mindestens eine Verarbeitungsschnecke läuft, **dadurch gekennzeichnet, daß** der Zylinder mit mindestens zwei Rohrleitungssystemen umgeben ist, das mit eine Flüssigkeit bei Raumtemperatur mindestens zu 20 % und max. zu 85 % gefüllt ist, druckdicht verschlossen ist und dieses Medium in dem Leitungssystem einen Energietransport in Achsialrichtung des Zylinders vornimmt

2. Vorrichtung nach Anspruch 1, **dadurch gekennzeichnet, daß** in dem Leitungssystem eine Flüssigkeit oder ein Flüssigkeitsgemisch mit einer Siedetemperatur von 75°C bis 250°C und eine Kondensationstemperatur von 22°C bis 60°C enthalten ist.

3. Vorrichtung nach Anspruch 1 bis 2, **dadurch gekennzeichnet, daß** in dem Leitungssystem Einbauten eingebracht werden, die einen steten Kreislauf mit stetem Übergang von Gas zu Flüssigkeit bzw. umgekehrt beeinflussen.

4. Vorrichtung nach Anspruch 1 bis 3, **dadurch gekennzeichnet, daß** in dem Leitungssystem mindestens eine Pumpe zur Erzeugung eines definierten Kreislaufverhaltens eingesetzt wird.

5. Vorrichtung nach Anspruch 1 bis 4, **dadurch gekennzeichnet, daß** in dem Leitungssystem eine Flüssigkeit oder ein Flüssigkeitsgemisch mit hoher Verdampfungsenergie eingesetzt wird.

6. Verfahren zur Verarbeitung von Kunststoffen in einem System, bestehend aus einem Zylinder und mindestens einer darin laufenden Schnecke und einem geschlossenen Temperierleitungssystem um den Zylinder, **dadurch gekennzeichnet, daß** dieses Temperierleitungssystem um den Zylinder mit eine Flüssigkeit bei Raum temperatur mindestens zu 20 % und max zu 85 % gefüllt ist, wobei dieses Medium in dem Leitungssystem einen Energietransport in Achsialrichtung des Zylinders vornimmt, und der Engergieeintrag / der Wärmetransport in das Temperierleitungs system durch Ausnutzung von Siede- oder Verdampfungseffekte erfolgt und die Energieabgabe aus dem Leitungssystem durch Kondensationseffekte des Transportmediums erfolgt und ein Phasenübergang kontinuierlich in einem Kreislauf stattfindet.

7. Verfahren nach Anspruch 6, **dadurch gekennzeichnet, daß** das System entsprechend der benötigten bzw. abgegeben Wärmemenge selbstregulierend ist.

8. Verfahren nach Anspruch 6 u. 7, **dadurch gekennzeichnet, daß** das System bei Bedarf an Transport einer höheren Wärmemenge automatisch diese größere Wärmemenge transportiert.
